# FASCICULE DE BREVET EUROPEEN

(11) **EP 3 516 378 B1**
(45) Date de publication et mention de la délivrance du brevet: **16.09.2020**
(21) Numéro de dépôt: 17784350.5
(22) Date de dépôt: 19.09.2017
(51) Int. Cl.: G01N 21/90

(54) **DISPOSITIF POUR L'INSPECTION OPTIQUE DE RECIPIENTS EN VERRE EN SORTIE DE MACHINE DE FORMAGE**
VORRICHTUNG ZUR OPTISCHEN INSPEKTION VON GLASBEHÄLTERN BEIM VERLASSEN EINER FORMMASCHINE
DEVICE FOR OPTICALLY INSPECTING GLASS RECEPTACLES AS THEY LEAVE A MOULDING MACHINE

(30) Priorité: 19.09.2016 FR 1658759
(43) Date de publication de la demande: 31.07.2019
(73) Titulaire: Tiama, 69390 Vourles (FR)
(72) Inventeur: FILLON, Pascal, 69290 Grezieu la Varenne (FR); FOUGERE, Florent, 69210 L'Arbresle (FR); CHABERT, Adrien, 69007 Lyon (FR)
(74) Mandataire: Cabinet Beau de Loménie
(86) Numéro de dépôt international: PCT/FR2017/052507
(87) Numéro de publication internationale: WO 2018/051049

(56) Documents cités:
- EP-A1- 1 109 010
- EP-A2- 0 177 004
- DE-A1-102014 220 598
- DE-C1- 10 017 126
- FR-A1- 2 958 751
- FR-A1- 2 993 662

## Description

La présente invention concerne le domaine technique de l'inspection optique de récipients ou d'objets creux translucides ou transparents présentant une haute température.

L'objet de l'invention vise plus précisément l'inspection optique à haute cadence d'objets tels que des bouteilles ou des flacons en verre sortant d'une machine de fabrication ou de formage.

De manière classique, une machine de formage est constituée de différentes cavités équipées chacune d'un moule dans lequel le récipient prend sa forme finale à haute température. En sortie de la machine de formage, les récipients sont acheminés de manière à constituer une file sur un convoyeur de transport amenant les récipients à défiler successivement dans divers postes de traitement tels que de pulvérisation et de recuit.

Il apparaît intéressant d'identifier un défaut de formage le plus tôt possible à la sortie de la machine de formage avant les divers postes de traitement de manière à pouvoir le corriger le plus tôt possible au niveau de la machine de formage. Il est ainsi avantageux de détecter notamment des écarts dimensionnels ou des déformations des récipients qui sont directement reliés à des réglages du procédé de formage, afin de corriger, en cas de dérive, le procédé le plus rapidement possible.

Dans l'état de la technique il est connu d'installer, en sortie de la machine de formage, un système d'inspection optique sans contact permettant d'inspecter les récipients encore chauds c'est à dire à une température comprise entre 300°C et 600°C.

Par exemple, le brevet EP 0 177 004 propose un système d'inspection sans contact de récipients en verre encore chauds immédiatement après leur formage. Ce système comporte une source d'éclairage disposée selon un côté du convoyeur et une caméra linéaire montée sur le côté opposé du convoyeur équipé de la source d'éclairage. Les récipients qui se déplacent en défilement entre la source d'éclairage et la caméra sont rétroéclairés dans la mesure où la lumière utilisée pour cette observation se déplace de la source vers les récipients et des récipients vers le lieu d'observation.

Indépendamment de ce système d'inspection automatisé, les opérateurs qui règlent la machine de formage, ont fréquemment à leur disposition, une source d'éclairage appelée mireuse leur permettant d'estimer visuellement la qualité des récipients sortant de la machine de formage. Cette mireuse est installée le long du convoyeur placé en sortie de la machine de formage en étant située sur le côté du convoyeur opposé à la zone de circulation des opérateurs de sorte que les opérateurs observent les récipients par rétroéclairage.

Or, il est à noter que dans de nombreuses applications, la place disponible en sortie de la machine de formage ne permet pas l'installation d'une mireuse et d'un système d'inspection automatisé.

La présente invention vise à remédier aux inconvénients de l'art antérieur en proposant un dispositif pour l'inspection optique de récipients en verre à haute température, conçu pour permettre un contrôle visuel des récipients par des opérateurs et un contrôle automatisé des récipients tout en étant apte à pouvoir être implanté en sortie de la machine de formage.

Pour atteindre un tel objectif, le dispositif selon l'invention assure l'inspection optique de récipients en verre à haute température fabriqués par une machine de formage en sortie de laquelle les récipients sont posés successivement sur un convoyeur pour défiler à haute cadence devant le dispositif d'inspection qui comporte un système d'éclairage des récipients présentant une surface émettrice de lumière, au moins une caméra réalisant des images des récipients rétroéclairés par la lumière issue de la surface émettrice et un système pour piloter le fonctionnement du système d'éclairage et de la caméra.

Selon l'invention, la surface émettrice du système d'éclairage est apte à émettre d'une part :
- un premier flux lumineux dit de flash pendant une durée de flash inférieure à 1 ms et selon une longueur d'onde supérieure à 650 nm et d'autre part ;
- un deuxième flux lumineux dit de mirage comprenant des longueurs d'onde visibles inférieures à 650 nm et pendant une durée au moins supérieure à 2 s.

Le système d'éclairage est piloté pour :
- émettre le flux lumineux de flash pour chaque récipient défilant devant le dispositif de manière que la caméra puisse réaliser des images pour chaque récipient rétroéclairé par ledit flux lumineux flash ;
- émettre le flux lumineux dit de mirage indépendamment du flux lumineux de flash, en étant perçu continu pour un œil humain.

De plus, le système selon l'invention peut comporter en outre en combinaison au moins l'une et/ou l'autre des caractéristiques additionnelles suivantes :
- le système de pilotage du système d'éclairage comporte une commande manuelle pour régler l'intensité du flux lumineux dit de mirage émis par le système d'éclairage ;
- la commande manuelle est un organe de commande fixé sur le système d'éclairage ou déporté par rapport au système d'éclairage ;
- le système d'éclairage comporte une première série de sources lumineuses élémentaires dites de flash réparties régulièrement selon la surface émettrice de lumière et apte à produire une lumière de longueur d'onde comprise entre 650 nm et 5 000 nm ;
- le système d'éclairage comporte une deuxième série de sources lumineuses élémentaires dites de mirage réparties régulièrement selon la surface émettrice de lumière et apte à produire une lumière visible avec des longueurs d'onde comprises entre 300 et 650 nm ;
- les sources lumineuses élémentaires de la première série et les sources lumineuses élémentaires de la deuxième série sont positionnées de façon alternée sur au moins une plaque support s'étendant dans un plan ;
- le système d'éclairage comporte en tant que surface émettrice de lumière, un diffuseur disposé devant la plaque support des sources lumineuses élémentaires de la première série et les sources lumineuses de la deuxième série ;
- le système d'éclairage comporte une vitre de protection placée devant le diffuseur ;
- le système d'éclairage pour émettre le flux lumineux de flash est commandé par un système de pilotage, en tension et/ou courant et/ou durée d'impulsions de fréquence supérieure à 50 Hz ;
- le système d'éclairage pour émettre le flux lumineux de flash est commandé par un système de pilotage gérant la synchronisation entre le passage des récipients et l'émission des flux lumineux de flash et la prise des images par la caméra ;
- le système d'éclairage pour émettre le flux lumineux de mirage est commandé par un dispositif à modulation avec une fréquence supérieure à 50Hz de manière que le flux lumineux soit perçu continu pour un œil humain.

Un autre objet de l'invention est de proposer une installation d'inspection comportant un convoyeur sur lequel sont posés des récipients en verre à haute température sortant d'une machine de formage pour les amener à défiler successivement à haute cadence devant au moins un dispositif d'inspection.

Selon l'invention, le système d'éclairage des récipients est placé selon un côté du convoyeur tandis que la caméra est placée sur le côté opposé du convoyeur dans une zone de circulation pour des opérateurs.

De plus, l'installation selon l'invention peut présenter en outre en combinaison au moins l'une et/ou l'autre des caractéristiques additionnelles suivantes :
- le système d'éclairage est pourvu d'un organe de commande manuelle de réglage de l'intensité du flux lumineux dit de mirage, cet organe de commande étant fixé sur le système d'éclairage pour être accessible pour un opérateur positionné dans la zone de circulation et relié au système de pilotage de système d'éclairage ;
- le système d'éclairage comporte un boîtier présentant en façade, une surface émettrice de lumière, le boîtier étant fixé au convoyeur.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique de dessus montrant un dispositif d'inspection conforme à l'invention positionné en sortie d'une machine de formage de récipients.
La **Figure 2** est une vue schématique de côté montrant le dispositif d'inspection conforme à l'invention illustré à la **Fig. 1****.**
La **Figure 3** est une vue schématique en perspective éclatée montrant un exemple de réalisation d'un système d'éclairage conforme à l'invention.
La **Figure 4** est une vue en plan d'un détail caractéristique du système d'éclairage conforme à l'invention.
La **Figure 5** illustre par des courbes A et B l'énergie relative émise E en fonction de la longueur d'onde λ, pour respectivement la réponse spectrale d'un œil humain et un exemple de spectre pour un flux lumineux dit de flash.
La **Figure 6** illustre l'énergie relative émise E en fonction de la longueur d'onde λ illustrant des exemples de spectre pour un flux lumineux dit de mirage.

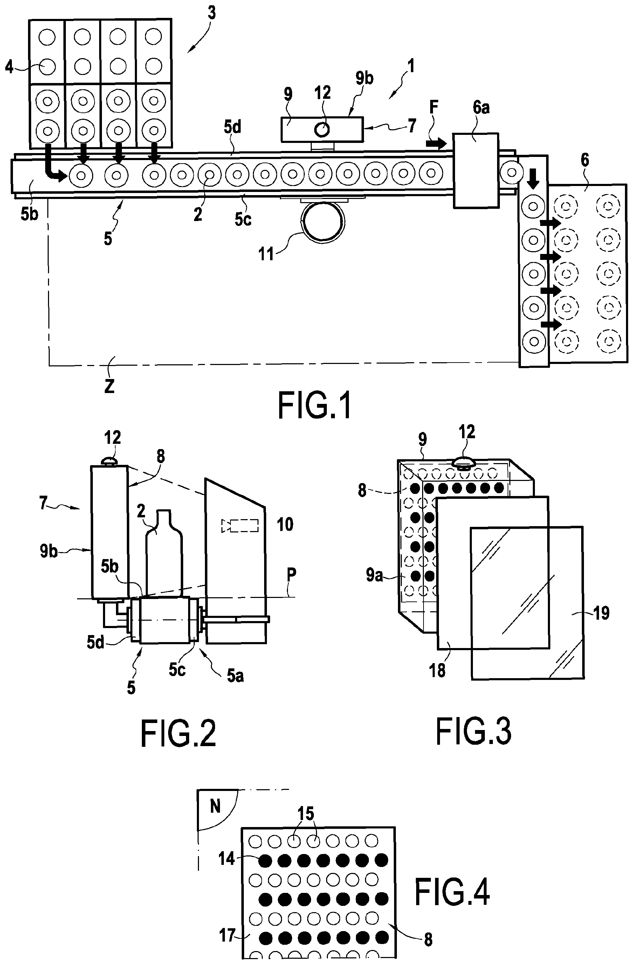

Tel que cela ressort plus précisément de la **Fig. 1****,** l'objet de l'invention concerne un dispositif **1** permettant d'inspecter à chaud des récipients transparents ou translucides **2** tels que par exemple des bouteilles ou des flacons en verre. Le dispositif **1** est placé de manière à permettre d'inspecter les récipients **2** sortant d'une machine de fabrication ou de formage **3** de tous types connus en soi. En sortie de la machine de formage, les récipients **2** présentent une haute température typiquement comprise entre 300°C et 600°C.

La machine de formage **3** comporte de manière classique une série de cavités **4** assurant chacune le formage d'un récipient **2.** De manière connue, les récipients **2** qui viennent d'être formés par la machine **3** sont posés successivement sur un convoyeur de sortie **5** pour former une file de récipients. Les récipients **2** sont transportés en file par le convoyeur **5** selon une direction de transfert **F** afin de les acheminer successivement à différents postes de traitement. Classiquement, ce convoyeur **5** comporte un bâti fixe **5a** reposant sur le sol et supportant un tapis mobile **5b** définissant un plan de convoyage **P** sur lequel reposent les récipients **2.** Ce convoyeur **5** est à hauteur variable c'est-à-dire que la distance entre le plan de convoyage **P** et le sol peut varier ainsi que l'angle d'inclinaison entre la direction de transfert **F** et le sol de manière que la file de récipients suit une pente montante ou descendante.

Le tapis mobile **5b** se déplace sur le bâti fixe **5a** comprenant deux parois latérales **5c, 5d** qui s'étendent sensiblement parallèlement entre-elles, en-dessous du plan de convoyage **P.** Ces deux parois fixes **5c, 5d** définissent les deux côtés opposés du convoyeur **5** à savoir par rapport à la zone d'intervention **Z** pour une personne, respectivement le côté avant et le côté arrière du convoyeur. La paroi **5c** est ainsi appelée la paroi avant délimitant un côté de la zone d'intervention **Z** pour une personne tandis que la paroi arrière du convoyeur est désignée par la référence **5d.**

Conformément à l'invention, le dispositif d'inspection **1** selon l'invention est placé au plus près de la machine de formage **3** de sorte que le convoyeur **5** assure le défilement successif des récipients **2** à haute température devant ce dispositif d'inspection **1** qui permet ainsi de contrôler en ligne l'état défectueux ou non des récipients **2.** Typiquement, le dispositif **1** est positionné entre la sortie de la machine de formage **3** et une arche de recuisson **6,** et de préférence avant une hotte de traitement de surface **6a** constituant généralement le premier des postes de traitement après la machine de formage.

Le dispositif d'inspection **1** selon l'invention comporte un système d'éclairage **7** des récipients **2** présentant une surface émettrice **8** de lumière s'étendant en façade d'un boîtier **9.** Dans l'exemple de réalisation illustré, le boîtier **9** présente une forme parallélépipédique mais il clair que le boîtier peut présenter une forme différente. De même, la surface émettrice **8** peut être plane ou courbe. Tel que cela apparaît sur les dessins, le boîtier **9** comporte des parois latérales **9a** s'élevant perpendiculairement par rapport à un fond **9b** qui s'étend parallèlement à la surface émettrice **8** qui présente une forme rectangulaire.

Le dispositif d'inspection **1** selon l'invention comporte également au moins une caméra **10** réalisant des images des récipients rétroéclairés par la lumière issue de la surface émettrice **8.** A cet effet, le système d'éclairage **7** se trouve positionné d'un côté du convoyeur **5** tandis que la caméra **10** se trouve positionnée de l'autre côté du convoyeur **5.** Ainsi, la caméra **10** est positionnée selon le côté avant du convoyeur délimitant la zone d'intervention **Z** tandis que le système d'éclairage **7** est positionné sur le côté arrière du convoyeur **5.**

Avantageusement, la caméra **10** est munie de son objectif. Typiquement, la caméra **10** comprend un capteur d'image électronique, délivrant une image électronique, numérique ou analogique, à un système d'analyse et ou de mémorisation et ou d'affichage d'images. Ledit capteur d'image est de préférence matriciel et son temps (durée) ainsi que l'occurrence (instant) d'intégration peuvent être contrôlés, au moyen d'un dispositif de pilotage. Il est sensible à tout type de lumière émise par le système d'éclairage **7** illuminant les récipients. L'objectif monté sur la caméra focalise une image optique des récipients, ou d'une partie des récipients, sur le capteur d'image. Autrement dit, l'objectif réalise une image optique que le capteur d'image convertit en image électronique. Par exemple, la caméra **10** est montée dans un boîtier de montage **11.**

De préférence, le boîtier **11** est monté solidaire du convoyeur en étant monté directement sur la paroi avant **5c** du convoyeur **5.** De même, le système d'éclairage **8** est monté solidaire du convoyeur en étant monté directement sur la paroi arrière **5d** du convoyeur **5.** Le boîtier **11** et le système d'éclairage **8** sont montés solidaires du convoyeur **5** par tous moyens adaptés pour assurer une liaison rigide avec le convoyeur.

Le dispositif d'inspection **1** selon l'invention comporte également des systèmes électroniques de pilotage, comprenant un système de pilotage du système d'éclairage **7** et un système de pilotage de la caméra **10.** Ces systèmes de pilotage qui ne sont pas représentés sur les figures sont réalisés par tous moyens électroniques permettant de commander le fonctionnement du système d'éclairage **7** et de la caméra **10.** Le système de pilotage de la source de lumière peut être ou non inclus dans le boîtier **9** de la source de lumière **7.** Les systèmes de pilotage peuvent être séparés ou réunis dans un seul équipement. Ils peuvent également être aménagés et combinés avec un système d'analyse et ou de mémorisation et ou d'affichage d'images.

De manière classique, les systèmes de pilotages sont avantageusement reliés à d'autres organes tels que la machine de formage **3** ou un codeur du convoyeur **5.** Le système de pilotage de la caméra **10** est apte à délivrer, à la caméra, un ordre d'intégration d'image, synchronisé avec le défilement des récipients pour synchroniser l'acquisition d'image avec le passage d'un récipient dans le champ d'observation de la caméra. Le système de pilotage de la source lumineuse **7** est apte à délivrer à la source, un ordre d'allumage synchronisé avec le défilement des récipients et avec l'intégration de la caméra pour permettre l'illumination d'un récipient et l'acquisition de son image au moment de sa présence dans le champ d'observation de la caméra.

Conformément à l'invention, le système d'éclairage **7** comporte une surface émettrice **8** apte à émettre d'une part, un premier flux lumineux dit de flash pendant une durée de flash inférieure à 1 ms et selon une longueur d'onde supérieure à 650 nm et d'autre part, un deuxième flux lumineux dit de mirage, comportant des longueurs d'onde inférieures à 650 nm et émis pendant une durée au moins supérieure à 2s et de préférence en continu.

Il doit donc être compris que la surface émettrice **8** émet un premier flux lumineux dit de flash avec une longueur d'onde supérieure à 650 nm et typiquement compris entre 650 nm et 5 000 nm et avantageusement entre 700 et 900 nm pour être en dehors du spectre visible. Il est à noter que la longueur d'onde de ce premier flux lumineux est choisie afin d'être imperceptible par un œil humain. En effet, ce flux lumineux de flash ne doit pas déranger les opérateurs, voire leur provoquer des troubles visuels ou nerveux.

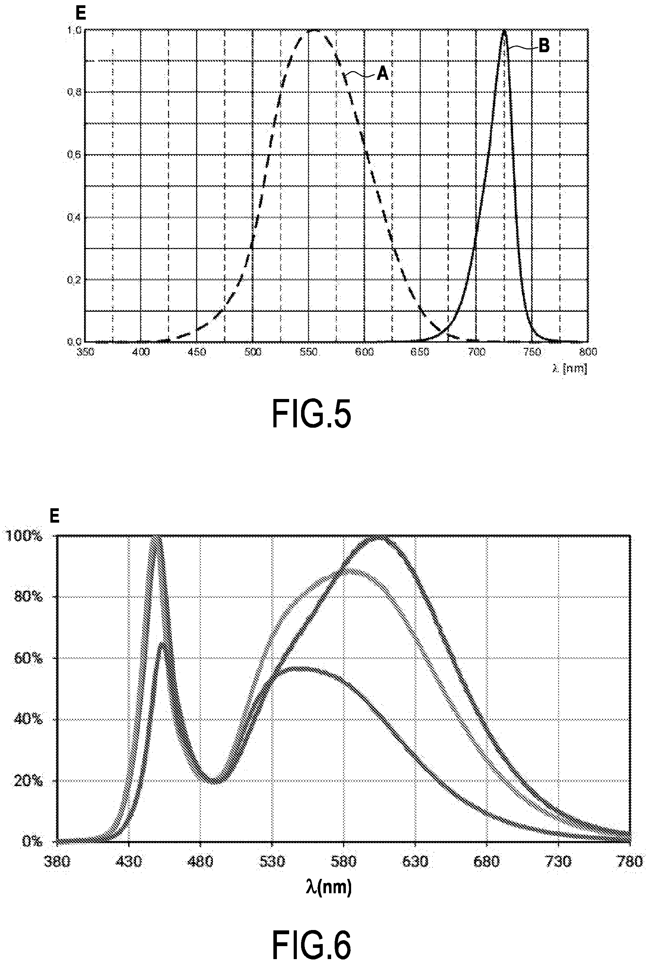

La courbe **A** de la **Fig. 5** illustre la réponse spectrale de l'œil humain tandis que la courbe **B** montre un exemple de spectre du flux lumineux de flash. Il est à noter que le spectre du flux lumineux de flash est également étroit, avec une largeur de 30 nm maximum, à 50% de l'énergie.

Par ailleurs, ce premier flux lumineux dit de flash est émis pendant une durée la plus courte possible afin de réduire le flou de bougé dans les images et de ne pas déranger un opérateur. Par exemple, la durée de flash est comprise entre 1 µs et 1 ms et avantageusement entre 50 µs et 500 µs. Le choix de la durée de ce premier flux lumineux garantit un maximum d'intensité lumineuse au moment de l'inspection par la caméra. En d'autres termes, le système d'éclairage **7** fournit en tant que premier flux lumineux, un éclairage pulsé infra-rouge (au sens de la Commission Internationale de l'Eclairage) destiné à être capté par la caméra **10.**

Il doit être considéré que la surface émettrice **8** émet un deuxième flux lumineux dit de mirage comportant des longueurs d'onde visibles inférieures à 650 nm et typiquement compris entre 300 nm et 650 nm. Il est à noter que le spectre des longueurs d'onde de ce deuxième flux lumineux est choisi afin d'être perceptible par un œil humain et de traverser la majorité des bouteilles en verres. Typiquement, la surface émettrice **8** émet en tant que deuxième flux lumineux, une lumière de spectre visible étendu, par exemple une forme de lumière blanche permettant à une personne située dans la zone d'intervention **Z,** d'inspecter les récipients par rétroéclairage. La **Fig. 6** donne à titre d'exemple, des exemples de spectres pour le deuxième flux lumineux dit de mirage.

Par ailleurs, ce deuxième flux lumineux dit de mirage est émis pendant une durée supérieure à 2 ms et avantageusement pendant le passage d'une série de récipients devant le dispositif d'inspection. Typiquement, ce deuxième flux lumineux dit de mirage est émis en continu pendant toute la durée de l'inspection des récipients sortant de la machine de formage. L'émission en continu signifie qu'aucune variation notoire de l'intensité lumineuse n'est perceptible par l'œil humain. Le flux lumineux dit de mirage est ainsi perçu continu pour un œil humain. Le système de pilotage du système d'éclairage **7** est donc apte à maintenir un flux lumineux en lumens (donc perçu par l'œil humain) stable à +/- 5%.

Bien entendu, entre deux types de production de récipients sortant de la machine de formage, le système d'éclairage **7** peut ne plus fournir ce deuxième flux lumineux de mirage.

Selon une autre caractéristique de l'invention, le système de pilotage commande le fonctionnement du système d'éclairage **7** pour émettre le flux lumineux de flash pour chaque récipient **2** défilant devant le dispositif de manière que la caméra **10** puisse réaliser des images pour chaque récipient rétroéclairé par ledit flux lumineux de flash. Le flux lumineux de flash est donc émis lorsque la caméra est en intégration de lumière.

Ainsi, en fonction de la détection du défilement des récipients **2** en relation avec le dispositif d'inspection, le système de pilotage gère la synchronisation entre le passage des récipients, l'émission des flux lumineux de flash et la prise des images par la caméra ou intégration. Ainsi, lors du passage de chaque récipient **2** entre le système d'éclairage **7** et la caméra **10,** les systèmes de pilotage commandent d'une part, le système d'éclairage **7** pour qu'il émette le flux lumineux de flash et d'autre part, l'intégration de lumière par le capteur de la caméra **10** afin qu'elle puisse réaliser au moins une image du récipient rétroéclairé par ledit flux lumineux de flash.

Le système de pilotage commande en tension et/ou courant et/ou en durée le système d'éclairage **7** pour émettre le flux lumineux de flash.

Selon une autre caractéristique de l'invention, le système de pilotage commande le fonctionnement du système d'éclairage **7** afin qu'il émette le flux lumineux dit de mirage indépendamment du flux lumineux de flash, le maintenant pendant l'émission du flux lumineux de flash. En d'autres termes, le système d'éclairage **7** est apte à fournir en continu, une lumière blanche et à chaque passage de récipients devant le système d'inspection, une lumière pulsée infra-rouge. Ainsi, lors du passage de chaque récipient, le système d'éclairage **7** émet simultanément le premier éclairage et le deuxième éclairage. La lumière pulsée s'ajoute à la lumière continue.

Le système de pilotage du système d'éclairage **7** contrôle l'intensité du flux lumineux de mirage en modifiant l'intensité d'un courant et/ou d'une tension.

Selon une variante de l'invention, le système de pilotage du système d'éclairage **7** contrôle l'intensité perçue du flux lumineux de mirage par une méthode Modulation de Largeur d'Impulsions (Pulse Width Modulation). Autrement dit, le flux lumineux perçu est continu pour l'œil, mais en réalité il est composé de successions d'impulsions de largeur variable, émises à une fréquence de modulation suffisamment élevée pour donner à l'œil l'illusion de la continuité. La fréquence de modulation est supérieure à 50 Hz et peut atteindre 1 kHz. Selon cette variante de l'invention, l'état du flux lumineux de mirage durant l'émission du flux lumineux de flash peut être soit maintenue, soit réduite, soit nulle, pourvu que cette interruption ne provoque pas de gêne pour l'observateur humain dans la mesure où l'œil perçoit un flux lumineux de mirage continu.

Selon une caractéristique avantageuse de réalisation, le système de pilotage du système d'éclairage comporte une commande manuelle **12** pour régler l'intensité du flux lumineux dit de mirage émis par le système d'éclairage. Cette commande permet ainsi d'adapter l'intensité du flux lumineux en fonction notamment de la teinte et de l'épaisseur du verre des récipients. Avantageusement, cette commande manuelle **12** permet également d'assurer l'arrêt ou le démarrage de l'émission du flux lumineux dit de mirage du système d'éclairage **7.**

Selon une variante préférée de réalisation, la commande manuelle **12** est fixée sur le système d'éclairage **7.** Avantageusement, la commande manuelle **12** est fixée sur le système d'éclairage **7** pour être accessible pour un opérateur positionné dans la zone de circulation **Z.** Par exemple, la commande manuelle **12** est fixée sur le dessus du boîtier **9.** La commande manuelle **12** est un organe de commande réalisé de toute manière appropriée tel que par un variateur électrique.

Selon une autre variante de réalisation non illustrée, la commande manuelle **12** est déportée par rapport au système d'éclairage **7** pour être accessible pour un opérateur positionné dans la zone de circulation **Z.** Dans cet exemple de réalisation, la commande manuelle **12** est placée dans la zone de circulation en étant reliée au système de pilotage du système d'éclairage **7.**

Les **Fig. 3** et **4** illustrent un exemple préféré de réalisation du système d'éclairage **7** dont la surface émettrice **8** de lumière s'étend en façade du boîtier **9.** La surface émettrice **8** qui émet le flux lumineux dit de mirage et le flux lumineux de flash présente une largeur prise selon sens de défilement des récipients, et une hauteur prise perpendiculairement au plan de convoyeur définies plus grande que les récipients en défilement. La largeur est typiquement comprise entre 100 mm et 400 mm et une hauteur comprise entre 200 mm et 800 mm.

Le système d'éclairage **7** comporte une première série de sources lumineuses élémentaires **14** dites de flash réparties régulièrement selon la surface émettrice de lumière et apte à produire le premier flux lumineux. Typiquement, les sources lumineuses élémentaires **14** dites de flash sont des diodes électroluminescentes (LED ou OLED).

Le système d'éclairage **7** comporte une deuxième série de sources lumineuses élémentaires **15** dites de mirage réparties régulièrement selon la surface émettrice de lumière et apte à produire le deuxième flux lumineux. Typiquement, les sources lumineuses élémentaires **15** dites de mirage sont des diodes électroluminescentes (LED ou OLED).

Les sources lumineuses élémentaires **14** de la première série et les sources lumineuses élémentaires **15** de la deuxième série sont positionnées de façon alternée sur au moins une plaque support **17** telle qu'un circuit imprimé. Dans l'exemple illustré, les sources lumineuses **14, 15** sont montées sur une seule plaque de support **17** s'étendant dans un plan **N.** Bien entendu, les sources lumineuses peuvent être montées sur plusieurs plaques de support **17** superposées montées pour s'étendre dans le plan **N.**

Dans l'exemple illustré à la **Fig. 4****,** les sources lumineuses élémentaires **14** de la première série sont organisées selon des lignes superposées parallèles entre elles, et par exemple parallèles à direction de transfert **F.** De même, les sources lumineuses élémentaires **15** de la deuxième série sont organisées selon des lignes superposées parallèles entre elles mais entrecroisées avec celles de la première série. Ainsi, une ligne de sources lumineuses élémentaires d'une série se trouve alternativement interposée entre deux lignes de sources lumineuses élémentaires d'une autre série.

Selon un exemple préféré de réalisation illustré à la **Fig. 3****,** le système d'éclairage **7** comporte en tant que surface émettrice de lumière, un diffuseur **18** disposé devant la plaque support **17** des sources lumineuses élémentaires de la première série et des sources lumineuses de la deuxième série. Le système d'éclairage **7** comporte de préférence une vitre de protection **19** placée devant le diffuseur **18.**

Bien entendu, il est à noter que la surface émettrice de lumière **8** peut correspondre à l'ensemble des sources lumineuses élémentaires **14** dites de flash et des sources lumineuses **15** dites de mirage dans le cas où le diffuseur **18** n'est pas installé. En d'autres termes, la surface émettrice de lumière **8** correspond à surface lumineuse dont la lumière émise est perçue par l'observateur ou bien la caméra.

## Revendications

1. Dispositif pour l'inspection optique de récipients en verre (**2**) à haute température fabriqués par une machine de formage (**3**) en sortie de laquelle les récipients sont posés successivement sur un convoyeur (**5**) pour défiler à haute cadence devant le dispositif d'inspection (**1**) qui comporte un système d'éclairage (**7**) des récipients présentant une surface émettrice (**8**) de lumière, au moins une caméra (**10**) réalisant des images des récipients rétroéclairés par la lumière issue de la surface émettrice et un système pour piloter le fonctionnement du système d'éclairage (**7**) et de la caméra (**10**), **caractérisé en ce que** la surface émettrice (**8**) du système d'éclairage (**7**) est apte à émettre d'une part :
- un premier flux lumineux dit de flash pendant une durée de flash inférieure à 1 ms et selon une longueur d'onde supérieure à 650 nm et d'autre part ;
- un deuxième flux lumineux dit de mirage comprenant des longueurs d'onde visibles inférieures à 650 nm et pendant une durée au moins supérieure à 2 s ;
et **en ce que** le système d'éclairage (**7**) est piloté pour :
- émettre le flux lumineux de flash pour chaque récipient défilant devant le dispositif de manière que la caméra (**10**) puisse réaliser des images pour chaque récipient rétroéclairé par ledit flux lumineux flash ;
- émettre le flux lumineux dit de mirage indépendamment du flux lumineux de flash, en étant perçu continu pour un œil humain.

2. Dispositif d'inspection selon la revendication 1, caractérisé en ce le système de pilotage du système d'éclairage (**7**) comporte une commande manuelle (**12**) pour régler l'intensité du flux lumineux dit de mirage émis par le système d'éclairage.

3. Dispositif d'inspection selon la revendication 2, **caractérisé en ce que** la commande manuelle (**12**) est un organe de commande fixé sur le système d'éclairage ou déporté par rapport au système d'éclairage.

4. Dispositif d'inspection selon l'une des revendications précédentes, **caractérisé en ce que** le système d'éclairage (**7**) comporte une première série de sources lumineuses élémentaires (**14**) dites de flash réparties régulièrement selon la surface émettrice de lumière et apte à produire une lumière de longueur d'onde comprise entre 650 nm et 5 000 nm.

5. Dispositif d'inspection selon l'une des revendications précédentes, **caractérisé en ce que** le système d'éclairage (**7**) comporte une deuxième série de sources lumineuses élémentaires (**15**) dites de mirage réparties régulièrement selon la surface émettrice de lumière et apte à produire une lumière visible avec des longueurs d'onde comprises entre 300 et 650 nm.

6. Dispositif d'inspection selon les revendications 4 et 5, **caractérisé en ce que** les sources lumineuses élémentaires (**14**) de la première série et les sources lumineuses élémentaires (**15**) de la deuxième série sont positionnées de façon alternée sur au moins une plaque support (**17**) s'étendant dans un plan.

7. Dispositif d'inspection selon la revendication 6, **caractérisé en ce que** le système d'éclairage (**7**) comporte en tant que surface émettrice de lumière, un diffuseur (**18**) disposé devant la plaque support (**17**) des sources lumineuses élémentaires de la première série et les sources lumineuses de la deuxième série.

8. Dispositif d'inspection selon la revendication 7, **caractérisé en ce que** le système d'éclairage (**7**) comporte une vitre de protection (**19**) placée devant le diffuseur (**18**).

9. Dispositif d'inspection selon l'une des revendications précédentes, **caractérisé en ce que** le système d'éclairage (**7**) pour émettre le flux lumineux de flash est commandé par un système de pilotage, en tension et/ou courant et/ou durée d'impulsions de fréquence supérieure à 50 Hz.

10. Dispositif d'inspection selon l'une des revendications précédentes, **caractérisé en ce que** le système d'éclairage (**7**) pour émettre le flux lumineux de flash est commandé par un système de pilotage gérant la synchronisation entre le passage des récipients et l'émission des flux lumineux de flash et la prise des images par la caméra (**10**).

11. Dispositif d'inspection selon l'une des revendications précédentes, **caractérisé en ce que** le système d'éclairage pour émettre le flux lumineux de mirage est commandé par un dispositif à modulation avec une fréquence supérieure à 50Hz de manière que le flux lumineux soit perçu continu pour un œil humain.

12. Installation d'inspection comportant au moins un dispositif d'inspection (11) conforme à l'une des revendications précédentes et un convoyeur (**5**) sur lequel sont posés des récipients (**2**) en verre à haute température sortant d'une machine de formage (**3**) pour les amener à défiler successivement à haute cadence devant Z ledit moins un dispositif d'inspection (**11**) , **caractérisée en ce que** le système d'éclairage (**4**) des récipients (**2**) est placé selon un côté (**5d**) du convoyeur (**5**) tandis que la caméra (**10**) est placée sur le côté opposé (**5c**) du convoyeur dans une zone de circulation (**Z**) pour des opérateurs.

13. Installation d'inspection selon la revendication 12, **caractérisée** le système d'éclairage (**7**) est pourvu d'un organe de commande (**12**) manuelle de réglage de l'intensité du flux lumineux dit de mirage, cet organe de commande étant fixé sur le système d'éclairage (**7**) pour être accessible pour un opérateur positionné dans la zone de circulation (**Z**) et relié au système de pilotage de système d'éclairage (**7**).

14. Installation d'inspection selon la revendication 12 ou 13, **caractérisée en ce que** le système d'éclairage (**7**) comporte un boîtier (**9**) présentant en façade, une surface émettrice (**8**) de lumière, le boîtier (**9**) étant fixé au convoyeur (**5**).

## Patentansprüche

1. Vorrichtung zur optischen Überprüfung von Behältern aus Glas (2) mit hoher Temperatur, die von einer Formungsmaschine (3) hergestellt werden, an deren Ausgang die Behälter der Reihe nach auf einer Fördereinrichtung (5) abgelegt werden, um mit hoher Taktzahl vor der Vorrichtung zur Überprüfung (1) vorbeizulaufen, wobei diese ein Beleuchtungssystem (7) für die Behälter beinhaltet, das eine Licht aussendende Oberfläche (8) aufweist, zumindest eine Kamera (10), die Bilder der Behälter anfertigt, die von hinten durch Licht von der (Licht) aussendenden Oberfläche beleuchtet werden, und ein System zur Steuerung der Funktion des Beleuchtungssystems (7) und der Kamera (10), **dadurch gekennzeichnet, dass** die (Licht) aussendende Oberfläche (8) des Beleuchtungssystems (7) dazu geeignet ist, einerseits:
- einen ersten als Blitz bezeichneten Lichtstrom während einer Dauer des Blitzes von weniger als 1 ms und gemäß einer Wellenlänge von mehr als 650 nm auszusenden, und andererseits
- einen zweiten als Spiegelung bezeichneten Lichtstrom umfassend sichtbare Wellenlängen von weniger als 650 nm und während einer Dauer von zumindest mehr als 2 s auszusenden,
und dadurch, dass das Beleuchtungssystem (7) gesteuert wird, um:
- den Blitz-Lichtstrom für jeden Behälter, der vor der Vorrichtung vorbeiläuft, auf solche Weise auszusenden, dass die Kamera (10) Bilder für jeden Behälter, der von dem Blitz-Lichtstrom von hinten beleuchtet wird, anfertigen kann,
- den als Spiegelung bezeichneten Lichtstrom unabhängig von dem Blitz-Lichtstrom auszusenden, während dieser ständig für ein menschliches Auge wahrnehmbar ist.

2. Vorrichtung zur Überprüfung nach Anspruch 1, **dadurch gekennzeichnet, dass** das Steuersystem des Beleuchtungssystems (7) eine manuelle Steuerung (12) beinhaltet, um die Intensität des als Spiegelung bezeichneten Lichtstroms, der von dem Beleuchtungssystem ausgesendet wird, zu regeln.

3. Vorrichtung zur Überprüfung nach Anspruch 2, **dadurch gekennzeichnet, dass** die manuelle Steuerung (12) ein an dem Beleuchtungssystem fixiertes oder in Bezug auf das Beleuchtungssystem entfernt angeordnetes Steuerorgan ist.

4. Vorrichtung zur Überprüfung nach einem der vorhergehenden Ansprüche, **dadurch gekennzeichnet, dass** das Beleuchtungssystem (7) eine erste Reihe von elementaren Lichtquellen (14) beinhaltet, die als Blitz bezeichnet werden und regelmäßig auf der Licht aussendenden Oberfläche verteilt sind und dazu geeignet sind, ein Licht mit einer Wellenlänge zwischen 650 nm und 5.000 nm zu erzeugen.

5. Vorrichtung zur Überprüfung nach einem der vorhergehenden Ansprüche, **dadurch gekennzeichnet, dass** das Beleuchtungssystem (7) eine zweite Reihe von elementaren Lichtquellen (15) beinhaltet, die als Spiegelung bezeichnet werden und regelmäßig auf der Licht aussendenden Oberfläche verteilt sind und dazu geeignet sind, ein sichtbares Licht mit Wellenlängen zwischen 300 nm und 650 nm zu erzeugen.

6. Vorrichtung zur Überprüfung nach den Ansprüchen 4 und 5, **dadurch gekennzeichnet, dass** die elementaren Lichtquellen (14) der ersten Reihe und die elementaren Lichtquellen (15) der zweiten Reihe auf abwechselnde Weise auf zumindest einer Trägerplatte (17), die sich in einer Ebene erstreckt, positioniert sind.

7. Vorrichtung zur Überprüfung nach Anspruch 6, **dadurch gekennzeichnet, dass** das Beleuchtungssystem (7) als Licht aussendende Oberfläche einen Diffusor (18) beinhaltet, der vor der Trägerplatte (17) der elementaren Lichtquellen der ersten Reihe und den Lichtquellen der zweiten Reihe angeordnet ist.

8. Vorrichtung zur Überprüfung nach Anspruch 7, **dadurch gekennzeichnet, dass** das Beleuchtungssystem (7) eine Schutzscheibe (19) beinhaltet, die vor dem Diffusor (18) platziert ist.

9. Vorrichtung zur Überprüfung nach einem der vorhergehenden Ansprüche, **dadurch gekennzeichnet, dass** das Beleuchtungssystem (7) zum Aussenden des Blitz-Lichtstroms durch ein Steuersystem in der Spannung und/oder dem Strom und/oder der Impulsdauer mit einer Frequenz von mehr als 50 Hz gesteuert wird.

10. Vorrichtung zur Überprüfung nach einem der vorhergehenden Ansprüche, **dadurch gekennzeichnet, dass** das Beleuchtungssystem (7) zum Aussenden des Blitz-Lichtstroms durch ein Steuersystem gesteuert wird, das die Synchronisation zwischen dem Durchgang der Behälter und der Aussendung der Blitz-Lichtströme und der Aufnahme der Bilder durch die Kamera (10) verwaltet.

11. Vorrichtung zur Überprüfung nach einem der vorhergehenden Ansprüche, **dadurch gekennzeichnet, dass** das Beleuchtungssystem zum Aussenden des Spiegelungs-Lichtstroms durch eine Modulationsvorrichtung mit einer Frequenz von mehr als 50 Hz auf solche Weise gesteuert wird, dass der Lichtstrom ständig für ein menschliches Auge wahrnehmbar ist.

12. Anlage zur Überprüfung, die zumindest eine Vorrichtung zur Überprüfung (11) nach einem der vorhergehenden Ansprüche und eine Fördereinrichtung (5) beinhaltet, auf welcher Behälter (2) aus Glas mit hoher Temperatur, die aus einer Formungsmaschine (3) austreten, abgelegt werden, um sie zu veranlassen, der Reihe nach mit hoher Taktzahl vor der zumindest einen Vorrichtung zur Überprüfung (11) vorbeizulaufen, **dadurch gekennzeichnet, dass** das Beleuchtungssystem (4) für die Behälter (2) gemäß einer Seite (5d) der Fördereinrichtung (5) platziert ist, während die Kamera (10) auf der entgegengesetzten Seite (5c) der Fördereinrichtung in einer Bewegungszone (Z) für Bediener platziert ist.

13. Anlage zur Überprüfung nach Anspruch 12, **dadurch gekennzeichnet, dass** das Beleuchtungssystem (7) mit einem manuellen Steuerorgan (12) zur Regelung der Intensität des als Spiegelung bezeichneten Lichtstroms versehen ist, wobei dieses Steuerorgan an dem Beleuchtungssystem (7) fixiert ist, um für einen Bediener, der in der Bewegungszone (Z) positioniert ist, zugänglich zu sein, und mit dem Steuersystem des Beleuchtungssystems (7) verbunden ist.

14. Anlage zur Überprüfung nach Anspruch 12 oder 13, **dadurch gekennzeichnet, dass** das Beleuchtungssystem (7) ein Gehäuse (9) beinhaltet, das an der Fassade eine Licht aussendende Oberfläche (8) aufweist, wobei das Gehäuse (9) an der Fördereinrichtung (5) fixiert ist.

## Claims

1. An inspection device for optically inspecting glass containers (2) at high temperature manufactured in a forming machine (3), the containers being placed in succession on a conveyor (5) at the outlet from the forming machine to travel at a high rate past the inspection device (1), which comprises a container lighting system (7) presenting a light-emitting surface (8), at least one camera (10) taking images of containers back-lighted by the light from the light-emitting surface, and a system for controlling the operation of the lighting system (7) and of the camera (10), the inspection device being **characterized in that** the light-emitting surface (8) of the lighting system (7) is suitable for emitting both:
- a "flash" first light flux for a flash duration shorter than 1 ms and at a wavelength longer than 650 nm; and also
- a "bottle-scanning" second light flux comprising visible wavelengths shorter than 650 nm and for a duration of not less than 2 s;
and **in that** the lighting system (7) is controlled:
- to emit the flash light flux for each container traveling past the device in such a manner as to enable the camera (10) to take images of each container back-lighted by said flash light flux; and
- to emit the "bottle-scanning" light flux independently of the flash light flux, so as to be perceived by a human eye as being continuous.

2. An inspection device according to claim 1, **characterized in that** the system for controlling the lighting system (7) has a manual control (12) for adjusting the intensity of the "bottle-scanning" light flux emitted by the lighting system.

3. An inspection device according to claim 2, **characterized in that** the manual control (12) is a control member mounted on the lighting system or situated remotely from the lighting system.

4. An inspection device according to any preceding claim, **characterized in that** the lighting system (7) includes a first series of individual light sources (14) for "flash" light that are distributed regularly over the light-emitting surface and that are suitable for producing light at a wavelength in the range 650 nm to 5000 nm.

5. An inspection device according to any preceding claim, **characterized in that** the lighting system (7) includes a second series of individual light sources (15) for emitting "bottle-scanning" flux that are distributed regularly over the light-emitting surface and that are suitable for producing visible light at wavelengths lying in the range 300 nm to 650 nm.

6. An inspection device according to claim 4 and claim 5, **characterized in that** the individual light sources (14) of the first series and the individual light sources (15) of the second series are positioned in alternating manner on at least one support plate (17) extending in a plane.

7. An inspection device according to claim 6, **characterized in that** the lighting system (7) includes as its light-emitting surface a diffuser (18) placed in front of the support plate (17) for the individual light sources of the first series and for the light sources of the second series.

8. An inspection device according to claim 7, **characterized in that** the lighting system (7) includes a protective pane (19) placed in front of the diffuser (18) .

9. An inspection device according to any preceding claim, **characterized in that** the lighting system (7) for emitting the flash light flux is controlled by a voltage and/or current and/or pulse duration system to operate at a frequency higher than 50 Hz.

10. An inspection device according to any preceding claim, **characterized in that** the lighting system (7) for emitting the flash light flux is controlled by a control system serving to synchronize the passage of containers and the emission of flash light flux and the taking of images by the camera (10).

11. An inspection device according to any preceding claim, **characterized in that** the lighting system for emitting the bottle-scanning light flux is controlled by a modulator device operating at a frequency higher than 50 Hz so that the light flux is perceived as being continuous by a human eye.

12. An inspection installation including at least one inspection device (11) according to any preceding claim and a conveyor (5) on which high temperature glass containers (2) leaving a forming machine (3) are placed in order to cause them to travel in succession at a high rate past in front of said at least one inspection device (11, the inspection installation being **characterized in that** the lighting system (4) for lighting the containers (2) is placed on one side (5d) of the conveyor (5), while the camera (10) is placed on the opposite side (5c) of the conveyor in a movement zone (Z) for operators.

13. An inspection installation according to claim 12, **characterized in that** the lighting system (7) is provided with a manual control member (12) for adjusting the intensity of the "bottle-scanning" light flux, the control member being mounted on the lighting system (7) so as to be accessible for an operator located in the movement zone (Z) and being connected to the system for controlling the lighting system (7).

14. An inspection installation according to claim 12 or claim 13, **characterized in that** the lighting system (7) includes a housing (9) presenting a light-emitting surface (8) on a front face, the housing (9) being fastened to the conveyor (5).
